# EUROPÄISCHE PATENTSCHRIFT

(11) **EP 2 825 739 B1**
(45) Veröffentlichungstag und Bekanntmachung des Hinweises auf die Patenterteilung: **02.11.2016**
(21) Anmeldenummer: 13701045.0
(22) Anmeldetag: 21.01.2013
(51) Int. Cl.: F01N 3/20

(54) **WÄRMEVERTEILKÖRPER FÜR EINE HEIZUNG EINES SCR-SYSTEMS UND HEIZUNG**
HEAT DISTRIBUTION BODY FOR A HEATER OF AN SCR SYSTEM, AND HEATER
CORPS RÉPARTITEUR DE CHALEUR POUR LE CHAUFFAGE D'UN SYSTÈME SCR ET CHAUFFAGE

(30) Priorität: 15.03.2012 DE 102012204106
(43) Veröffentlichungstag der Anmeldung: 21.01.2015
(73) Patentinhaber: Robert Bosch GmbH, 70442 Stuttgart (DE)
(72) Erfinder: LANDES, Ewgenij, 71686 Remseck (DE); SCHOTT, Steffen, 71701 Schwieberdingen (DE)
(86) Internationale Anmeldenummer: PCT/EP2013/051017
(87) Internationale Veröffentlichungsnummer: WO 2013/135404

(56) Entgegenhaltungen:
- EP-A1- 1 505 135
- EP-A1- 2 652 278
- EP-A2- 1 249 647
- DE-A1-102005 025 724
- US-A1- 2009 100 824

## Beschreibung

### Stand der Technik

Die Erfindung betrifft einen Wärmeverteilkörper für eine Heizung eines SCR-Systems und eine Heizung.

Bei mit Dieselkraftstoff betriebenen Fahrzeugen ist insbesondere zur Erfüllung von Umweltauflagen eine Einspritzung von Harnstoff in die Abgasanlage vor einem SCR-Katalysator (SCR - Selektive Katalytische Reduktion) erforderlich. Damit werden die im Abgas enthaltenen NOx-Verbindungen in Wasser und Stickstoff umgewandelt.

Ein SCR-System umfasst unter anderem eine Heizung, welche die Aufgabe hat, bei Temperaturen unter dem Harnstoffgefrierpunkt den Harnstoff flüssig zu halten und gefrorenen Harnstoff aufzutauen, um die Entnahme von Harnstoff aus einem Tank zu ermöglichen. Bei DENOX-Systemen wird üblicherweise das Reduktionsmittel AdBlue^{®} eindosiert, welches einen Gefrierpunkt von - 11 °C hat. Beispielsweise umfasst eine derzeit bei einem PC/LD SCR-System verwendete Heizung einen Wärmeleitkörper aus Aluminium, ein PTC-Element als Wärmeerzeuger und elektrische Zulaufleitungen. Der Wärmeleitkörper aus Aluminium ist mit einem Isolationsstoff, insbesondere Kunststoff umspritzt, um eine Korrosion und/oder elektrischen Kurzschluss durch das Reduktionsmittel zu verhindern. Der umspritzte Wärmeleitkörper wird im Folgenden auch als Wärmeverteilkörper bezeichnet.

Der Erfindung geht das Problem voraus, dass es einen Unterschied in dem Wärmeausdehnungskoeffizient von Metall und Isolationsstoff gibt, welcher insbesondere beim Abkühlen oder/und mehrmaligen Temperaturwechseln normalerweise der Heizung Probleme bereitet. Der Isolationsstoff hat die Eigenschaft, sich stärker auszudehnen und sich auch stärker zusammenzuziehen als das Aluminium und es entstehen dadurch unzulässig hohe plastische Dehnungen bzw. Spannungen im Isolationsstoff, zusätzlich kommt es dabei zu Abhebungen der Umspritzung von dem Wärmeleitkörper. In der Praxis wurden Risse an der Kunststoffumspritzung der Heizung festgestellt. Auch entstehen dadurch Spalte zwischen der Umspritzung und dem Wärmeleitkörper in der Größenordnung bis zu 2 mm. Diese Risse stellen für das SCR-System ein besonderes Problem dar, da hierdurch Zutrittsöffnungen für das Reduktionsmittel, beispielsweise das sehr hohe Kriecheigenschaften aufweisende AdBlue^{®}, zu dem Wärmeleitkörper geschaffen werden. Wenn das Reduktionsmittel an den Wärmeleitkörper gelangt, kann es zu einer Korrosion am Metall kommen. Wenn das Reduktionsmittel bis zu der elektrischen Schnittstelle oder an das PTC-Element gelangt, kann dies zu Kurzschlüssen führen und sogar einen Totalschaden an der Heizung verursachen. Die sehr großen Spalte können zu einem Wärmestau führen, wodurch die Heizleistung verringert wird, weil das PTC-Element dadurch eine erhöhte Temperatur hat und aufgrund dessen stärker abgeregelt wird.

Die US 2009/100824 beschreibt ein Harnstoffsystem zur Abgasnachbehandlung mit einem Heizeinsatz für einen Harnstofftank.

Die EP 2652278 offenbart ein Fördermodul mit einem Heizkörper für einen Flüssigkeitstank.

### Offenbarung der Erfindung

Erfindungsgemäß wird vorgeschlagen, den Wärmeleitkörper mit spannungs- und/oder dehnungsvermindernden Elementen zur relativbewegungsarmen Aufnahme der Umspritzung am Wärmeleitkörper zu versehen. Ein Wärmeverteilkörper, welcher einen Wärmeleitkörper mit spannungs- und/oder dehnungsvermindernden Elementen und eine Umspritzung aufweist, erreicht problemlos über 1.000 Temperaturschockwechsel mit bestandener Durchschlagprüfung der Kunststoffumspritzung zum Wärmeverteilkörper bei einer Spannung von 15 kV bis 30 kV und bestandenem Gaslecktest (Helium-Dichtheitstext), wobei derartige Temperaturschockwechsel durch Erhitzen der Heizung auf 80 °C und daran anschließendes Abkühlen der Heizung auf - 40 °C durchgeführt wurden. Bei daran anschließender Durchschlagprüfung der Umspritzung mit einer Spannung von 15kV bis 30kV wurde kein Durchschlag zum Wärmeleitkörper festgestellt. Mittels eines Durchschlages wird ein Riss oder auch eine zu dünn ausgefallene Wandstärke der Kunststoffumspritzung detektiert. Bei einem Durchschlag handelt es sich letztendlich um einen Kurzschluss zwischen einer Prüfelektrode und einem beispielsweise mit Massepotential verbundenen Bauteil. Die Anzahl der Temperaturschockwechsel wird einsatzspezifisch gewählt. Die Höhe der Spannung - die oben stehenden 15 kV bis 30 kV - wird abhängig vom elektrischen Widerstand der Kunststoffumspritzung zum Werkstoff und von der Wanddicke gewählt. Im Gaslecktest mit Helium erwies sich der Wärmeverteilkörper mit spannungs- und dehnungsvermindernden Elementen ebenfalls als sehr stabil, so dass kein Gasaustritt durch die Umspritzung festgestellt werden konnte. Die Kunststoffumspritzung wies nach dem Test keinerlei Risse bzw. Rissansätze auf. Dabei sind die spannungs- und/oder dehnungsvermindernden Elemente als eine Oberfläche des Wärmeleitkörpers mit Wellenbergen und Wellentälern ausgestaltet, d. h. als eine wellenförmige Kontur des Wärmeleitkörpers. Die Wellenberge und Wellentäler können entlang von Achsen oder Armen in jede Raumrichtung des Wärmeleitkörpers angeordnet sein und können unterschiedliche Amplituden unabhängig von der Dicke der Achse oder des Armes aufweisen. In vorteilhafter Weise wird die Geometrie der Wellen abhängig vom eingesetzten Werkstoff durch Simulation unter Verringerung der Spannungen und Dehnungen und unter Berücksichtigung des Wärmetransportes ausgelegt. Die als eine wellenförmige Kontur des Wärmeleitkörpers ausgestalteten spannungs- und dehnungsvermindernden Elemente verteilen die beim Abkühlen und/oder Aufheizen im Umspritzungsmaterial entstehenden Dehnungen und Spannungen besonders gleichmäßig und verhindern wirksam die Beschädigungen am Umspritzungsmaterial bei Temperaturwechsel. Alternativ dazu oder zusätzlich dazu sind spannungs- und/oder dehnungsvermindernde Elemente als Oberflächenveränderungen des Wärmeleitkörpers realisiert, besonders bevorzugt umfassen die spannungs- und/oder dehnungsvermindernden Elemente Vertiefungen in der Oberfläche des Wärmeleitkörpers, insbesondere Nuten. Mit Nuten werden längliche Vertiefungen jeglicher Art bezeichnet. Derartige Vertiefungen können Rillen sein, Einkerbungen mit spitz zulaufendem oder bauchigem oder sogar hinterschnittenem Profil, wobei dem Fachmann das Maß der Gestaltungsfreiheit ersichtlich ist. Denkbar ist auch, dass die spannungs- und/oder dehnungsvermindernden Elemente als Erhöhungen in der Oberfläche ausgeführt werden, insbesondere als Wälle. Die Vertiefungen oder Erhöhungen können entlang von Achsen oder Armen des Wärmeleitkörpers angeordnet sein und können durch Simulation bedarfs- und anwendungsgerecht ausgelegt werden. Bei der Auslegung sind zulässige Spannungen und Dehnungen nicht zu überschreiten und die Wärmeauskopplung ist in optimaler Weise auszunutzen. Die Wärmeauskopplung kann geometrisch durch Verkleinerung oder Vergrößerung der Fläche und des Querschnitts des Wärmeleitkörpers beeinflusst werden. Die als Oberflächenveränderungen des Wärmeleitkörpers ausgestalteten Elemente verteilen die beim Abkühlen und/oder Aufheizen im Umspritzungsmaterial entstehenden Dehnungen und Spannungen gleichmäßig und verhindern Beschädigungen am Umspritzungsmaterial.

Die spannungs- und/oder dehnungsvermindernden Elemente sind bevorzugt in der Außenkontur des Wärmeleitkörpers ausgebildet, also Teile, welche der Kontur des Wärmeleitkörpers oder der Gestalt des Wärmeleitkörpers zuordnenbar sind. Sie bilden dabei eine Grenzfläche des Wärmeleitkörpers zur Umspritzung. Die Umspritzung mit einem Material mit elektrisch isolierenden Eigenschaften, die den Wärmeleitkörper teilweise oder vollständig umgibt, weist an der Grenzfläche zum Wärmeleitkörper entsprechende derartige spannungs- und/oder dehnungsvermindernde Elemente in negativer Form auf. Auf diese Weise werden insbesondere die durch Unterschiede im Wärmeausdehnungskoeffizienten entstehenden Zugspannungen und Dehnungen minimiert bzw. deutlich besser auf eine größere Oberfläche verteilt und von Temperaturwechseln hervorgerufene Abhebungen der Umspritzung vom Wärmeleitkörper aufgrund von Relativbewegungen idealerweise vermieden oder zumindest erheblich minimiert. Besonders vorteilhaft ist, dass durch die Verminderung des Abhebens der Umspritzung vom Wärmeleitkörper der Wärmetransport vom Wärmeleitkörper zur Umspritzung durch eine vergrößerte Kontaktfläche und einen damit einhergehenden größeren Kontaktbereich der Grenzflächen optimal gewährleistet ist.

Besonders vorteilhaft ist, dass der Unterschied in dem Wärmeausdehnungskoeffizient zwischen dem Material, welches für den Wärmeleitkörper verwendet wird, und dem Isolationsstoff einen geringeren Einfluss auf die Haltbarkeit der Umspritzung oder eines Isolationsstoffes ausübt als bisher. Hierdurch können bei Auswahl der geeigneten Isolationsstoffe, insbesondere Kunststoffe, weitere Faktoren stärker berücksichtigt werden, insbesondere die Verarbeitbarkeit, Herstellbarkeit, Wärmeleitfähigkeit, Dehnbarkeit, Festigkeit, Schweißbarkeit und Beständigkeit des Isolationsstoffs, da nunmehr eine Vielzahl von Stoffen für den Einsatz in dem Wärmeverteilkörper geeignet sind.

In einer weiteren Ausführungsform umfassen die spannungs- und/oder dehnungsvermindernden Elemente Formschlusselemente. Die Formschlusselemente können insbesondere Hinterschneidungen umfassen, wobei die Formschlusselemente im Schnitt beispielsweise als Schwalbenschwanz ausgeführt sein können. Durch Formschlusselemente kann der Kontakt und zwischen dem Wärmeleitkörper und der Umspritzung weiter verbessert werden. Bei der Ausführungsform mit Formschluss wird das Abheben der Umspritzung vom Wärmeleitkörper besonders effektiv im Talbereich der Wellen verhindert. Außerdem wird die Kontaktfläche zwischen dem Wärmeleitelement und der Umspritzung relativ zu einer planen Oberfläche entsprechend um das Maß der Hinterschneidung vergrößert, womit die Wärmeausleitung weiter entschieden verbessert wird.

Nach einer vorteilhaften Ausführungsform folgt ein Teil einer Außenkontur der Umspritzung oder die gesamte Außenkontur der Umspritzung der Kontur des Wärmeleitkörpers. Hierdurch wird im Vergleich zu einer Kontur ohne geometrische spannungs- und/oder dehnungsvermindernde Elemente eine Vergrößerung der Außenoberfläche erreicht. Die Vergrößerung der Außenoberfläche ermöglicht eine verbesserte Wärmeausleitung aus der Heizung. Die zur Verfügung stehende Heizenergie kann schneller an das Medium im Tank weitergegeben werden, wodurch die Heizleistung steigen kann und das Fluid schneller und in größeren Mengen aufgetaut werden kann. Die Heizung kann im Prinzip auch mit weniger Energie versorgt werden oder die PTC-Elemente können kleiner dimensioniert werden. Die PTC-Elemente haben maximale Leistung in einem bestimmten Temperaturbereich. Bei steigender Temperatur wird die Leistung abgeregelt, da bei einer Umspritzung, die aus Kunststoffmaterial gefertigt wird, die maximale Einsatztemperatur relativ niedrig ist. In diesem Falle sollte bei einer höheren Leistung der Heizung eine möglichst gute Wärmeauskopplung sichergestellt werden. Dies ist insbesondere dann von Bedeutung, wenn die maximal zulässige Temperatur, wie beispielsweise bei HDPE der Fall, und der Arbeitsbereich der PTC-Elemente relativ nahe beieinander liegen.

Nach einer alternativen Ausführungsform ist ein Teil der Außenkontur der Umspritzung oder die gesamte Außenkontur der Umspritzung wellenfrei und vertiefungsfrei ausgebildet. Die Umspritzung kann also eine ebene Außenseite aufweisen. Die spannungs- und/oder dehnungsvermindernden Elemente können dann von außen unsichtbar verbaut sein. Diese Variante kann insbesondere bei kleinen Spannungs- und/oder dehnungsvermindernden Elementen zum Einsatz kommen. Der Wärmeverteilkörper kann Arme oder Äste umfassen, die von Hauptachsen ausgehen. Die Außenkontur der Umspritzung kann in manchen Ästen oder Zweigen der Kontur des Wärmeleitkörpers folgen und in anderen Ästen oder Zweigen wellen- und vertiefungsfrei gestaltet sein.

Bevorzugt ist die Kontur des Wärmeleitkörpers spitzen- und kantenfrei gestaltet. Dies betrifft insbesondere die Gestalt der einzelnen spannungs- und/oder dehnungsvermindernden Elemente und den Übergang zwischen den spannungs- und/oder dehnungsvermindernden Elementen zu dem Grundkörper. Die Übergänge sind bevorzugt abgerundet ausgebildet, wobei Radien > 0,1 mm besonders bevorzugt sind. Das betrifft beispielsweise Ansätze für die Vertiefungen und Kanten für Erhöhungen. Eine spitzenfreie und kantenfreie Oberfläche, d.h. eine glatte Oberfläche ohne scharfe Kanten kann beispielsweise dadurch beschrieben sein, dass im Bereich einer Kante ein Zylinder oder im Bereich einer Ecke eine Kugel eingepasst wird und der Radius des Zylinders bzw. der Kugel 0,1 mm nicht unterschreitet. Es hat sich gezeigt, dass besonders in dem Kantenbereich und in den Eckenbereichen, insbesondere in den konkaven Ecken, d.h. inneren Ecken bei Temperaturschockwechsel Spannungsmaxima auftreten. Gerade in diesen Bereichen ist ein Ablösen der Umspritzung von dem Metall möglich, daher werden diese Bereiche bevorzugt abgerundet ausgeführt. Bei einem abgerundeten Bauteil liegen die kritischen Stellen zwar immer noch in den Eckbereichen, jedoch sind diese Bereiche dann großflächiger ausgestaltet und weniger scharf umrissen. Es können aber in den Bereichen, in denen geringere Spannungen bzw. Dehnungen vorliegen auch kleinere scharfe Kanten im Wärmeverteilkörper unter Berücksichtigung des eingesetzten Werkstoffes sowie der Wanddicke der Umspritzung zugelassen werden. Im vorstehenden Zusammenhang sind unter kleinen scharfen Kanten prozessbedingte lokal vorliegende Kanten und Krater gemeint, welche durch Verpressen, Schneiden, Schleifen oder eine Werkzeugtrennung bedingt entstehen und aus wirtschaftlichen Gründen nicht beseitigt werden.

Nach einer Ausführungsform ist der Wärmeleitkörper als ein Stranggusselement hergestellt. Das Element mit dem gewünschten Profil wird durch eine Matrize gepresst und in Scheiben geschnitten. Um eine insbesondere an den Kanten der Schnittfläche glatte, d. h. spitzen- und kantenfreie Oberfläche zu erhalten, sollte der Wärmeleitkörper hierbei nachbearbeitet werden. Dabei werden die Kanten beispielsweise abgeschmirgelt oder poliert. Im Stranggussverfahren entsteht ein Wärmeleitkörper mit einem über die Höhe im Wesentlichen unveränderten Querschnitt.

Es wird jedoch bevorzugt, den Wärmeleitkörper im Druckgussverfahren herzustellen. Durch das Gießen ist eine dreidimensionale Modellierung des Körpers möglich. Bei der Herstellung des Wärmeleitkörpers mit einem Druckgussverfahren wird die Wanddicke etwas größer gewählt, um zum Beispiel die Nachteile bei Wärmeleitfähigkeit und Festigkeit auszugleichen, wobei dies jedoch vom gewählten Werkstoff abhängig ist.

Bevorzugt wird der Wärmeleitkörper aus Aluminium gefertigt. Für die Umspritzung eignen sich besonders gut flüssigkeitsbeständige, isolierende und gut Wärme leitende Kunststoffe, wobei eine Vielzahl von Kunststoffarten in Betracht kommt und das Material anhand weiterer Kriterien wie Verfügbarkeit, Wärmeleitfähigkeit, Verschweißbarkeit und Schweißbarkeit ausgewählt werden kann. Insbesondere ist für die Umspritzung bzw. Beschichtung ein Werkstoff wie beispielsweise HDPE von Vorteil, weil zum Beispiel viele Tanks aus HDPE gefertigt werden, sodass eine direkte Anbindung der Heizung über einen Flansch an einen derartigen Tank beispielsweise mit Heizelementschweißen möglich ist. Auch eine kostengünstige Umsetzung bei der Wahl des Materials kann im Vordergrund stehen.

### Vorteile der Erfindung

Bei der erfindungsgemäß vorgeschlagenen Lösung wird bei einem Wärmeverteilkörper ein Wärmeleitkörper insbesondere entlang einiger seiner Arme mit spannungs- und dehnungsvermindernden Elementen versehen, wodurch eine größere Oberfläche zur Wärmeausleitung auf einer durch die Baugruppe vorgegebene Querschnittsfläche verteilt wird. Hierdurch wird insbesondere erreicht, dass beim Aufheizen und Abkühlen im Umspritzungsmaterial entstehende Dehnung und Spannungen gleichmäßig verteilt werden, so dass das Umspritzungsmaterial nicht beschädigt wird und ein Abheben der Umspritzung vom Metallkernkörper deutlich reduziert wird.

Die äußere, von außen sichtbare Kontur der Umspritzung kann gleichmäßig wie die Kontur des Wärmeleitkörpers oder unterschiedlich zu der Kontur des Wärmeleitkörpers ausgeführt werden. Dadurch kann zum Beispiel die Wandstärke entsprechend der Toleranzen angepasst werden oder es lassen sich auch andere Funktionselemente mit einarbeiten. So kann beispielsweise zur besseren Wärmeausleitung die Außenoberfläche ebenfalls geometrisch weiter vergrößert werden und die zur Verfügung stehende Heizungsenergie schneller an das Medium im Tank weitergegeben werden.

Weiterhin können in vorteilhafter Weise die spannungs- und dehnungsvermindernden Elemente als Formschlusselemente ausgeführt werden, wobei dies noch eine zusätzliche Oberflächenvergrößerung bereitstellt und das Abheben der Umspritzung vom Wärmeleitkörper verhindert wird. In vorteilhafter Weise vermindern die spannungs- und dehnungsvermindernden Elemente am Wärmeleitkörper im umspritzten Zustand des Wärmeleitkörpers das Auftreten von zu Relativbewegungen zwischen der den Wärmeleitkörper zumindest teilweise umhüllenden Umspritzung und dem Wärmeleitkörper selbst. Können diese Relativbewegungen im Idealfall vermieden bzw. zumindest signifikant herabgesetzt werden, ist auch die Rissbildungsneigung des Umspritzungsmaterials erheblich herabgesetzt, sodass die Dichtheit der Umspritzung einerseits gegeben ist und andererseits als Folge davon das Auftreten von Kurzschlüssen durch eingetretenes Reduktionsmittel sicher ausgeschlossen werden kann. Die spannungs- und dehnungsvermindernden Elemente sind in der Außenkontur des Wärmeleitkörpers ausgeführt und können der Umspritzung deren Außenkontur aufprägen. Es besteht daneben die Möglichkeit, die Außenkontur der Umspritzung auch als ebene Außenfläche auszubilden.

Der Wärmeverteilkörper wird vorteilhaft bei einer Heizung eines Systems zur Nachbehandlung von Abgasen eingesetzt. Allerdings ist die Erfindung nicht darauf beschränkt. Im Allgemeinen kann ein erfindungsgemäßer Wärmeverteilkörper in beliebigen Systemen zum Einsatz kommen, in welchen ein metallischer Wärmeleitkörper mittels einer Umspritzung aus einem Isolationsstoff vor einem Zutritt einer den Körper umgebenden Flüssigkeit geschützt werden muss, die ihrerseits von der Heizung zu erwärmen ist. Wenn der Isolationsstoff die Eigenschaft hat, sich stärker auszudehnen und sich stärker zusammenzuziehen als das Metall, bei Temperaturwechseln unzulässig hohe plastische Dehnungen bzw. Spannungen im Isolationsstoff entstehen und es zu Abhebungen der Umspritzung von dem Wärmeleitkörper kommt, dann kann durch Anordnung von spannungs- und dehnungsvermindernden Elementen im Wärmeleitkörper die Relativbewegung des Wärmeleitkörpers zur Umspritzung signifikant herabgesetzt werden.

### Kurze Beschreibung der Zeichnungen

Es zeigen:
- Figur 1: einen Wärmeverteilkörper gemäß des Standes der Technik,
- Figur 2: ein Wärmeleitkörper mit eingesetztem PTC-Element und Stromschiene in perspektivischer Ansicht,
- Figur 3: eine Heizung bzw. einen umspritzten Wärmeverteilkörper in perspektivischer Ansicht,
- Figur 4: Teile eines Wärmeleitkörpers von oben,
- Figur 5: Teile eines umspritzten Wärmeverteilkörpers in Ansicht von oben,
- Figur 6: Teile eines Wärmeleitkörpers in Draufsicht,
- Figur 7: Teile eines umspritzten Wärmeverteilkörpers in Schnittansicht,
- Figur 8: eine Tankbaueinheit mit Heizung welche in den Reduktionsmittelbehälter eines SCR-Systems eingebaut wird und
- Figuren 9.1 - 12.3: Ausführungsformen von spannungs- und/oder dehnungsvermindernden Elementen.

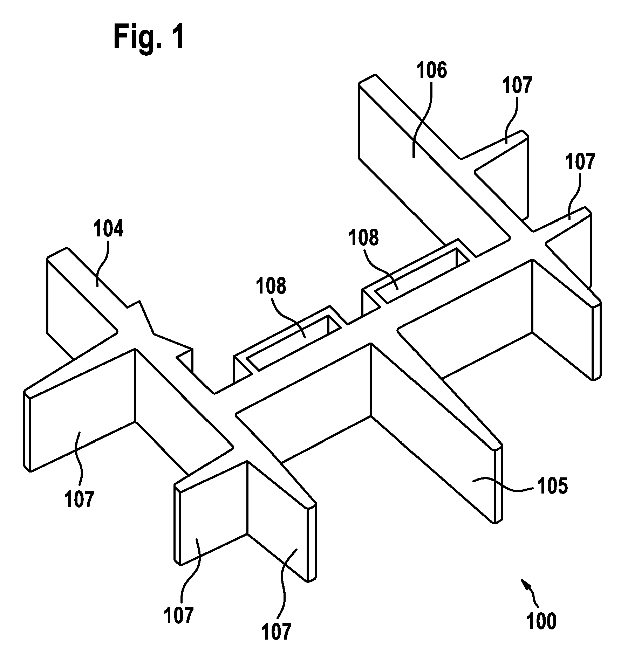

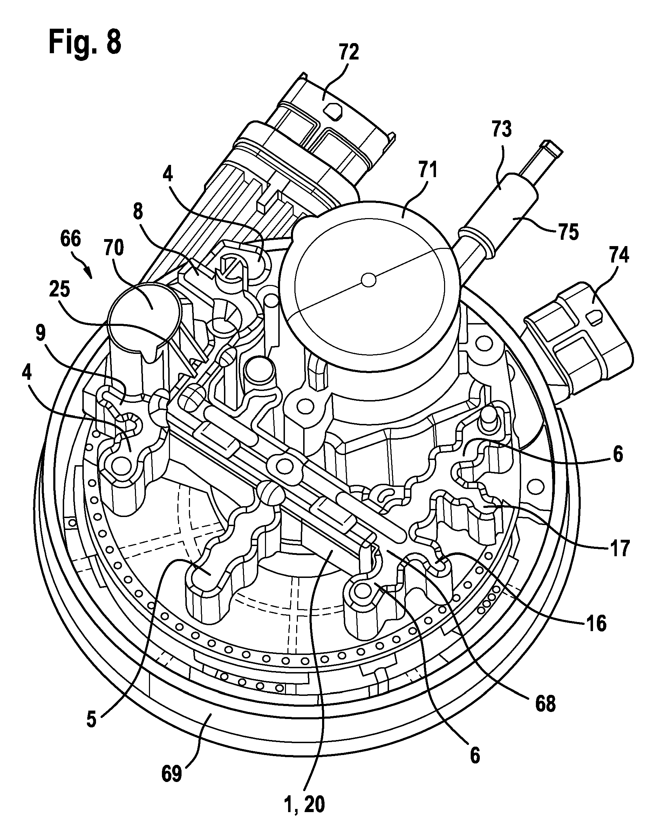

Figur 1 zeigt einen Wärmeleitkörper 100 mit drei Ästen 104, 105, 106 und davon abgehenden Zweigen 107 gemäß dem Stand der Technik. Der Wärmeleitkörper ist entlang seiner Äste 104, 105, 106 im Wesentlichen eben, d. h. glatt ausgeführt. Die Anzahl der Äste und Zweige ist durch den verfügbaren Platz in der Baugruppe stark beschränkt, was gut in der Figur 8 ersichtlich ist. Der Wärmeleitkörper 100 weist zwei Taschen 108 zur Aufnahme von PTC-Elementen auf.

### Ausführungsformen der Erfindung

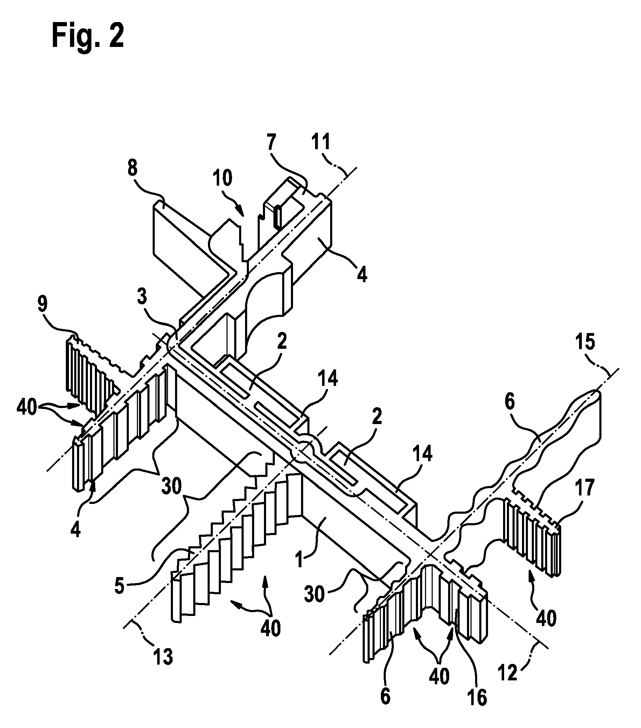

Figur 2 zeigt einen erfindungsgemäßen Wärmeleitkörper 1 mit eingepressten PTC-Elementen 2 und einer darauf angeordneten Stromschiene 3 in perspektivischer Darstellung. An einer Querachse 12 des Wärmeleitkörpers 1 sind nebeneinander zwei PTC-Elemente 2 angeordnet. Die PTC-Elemente 2 sind als flächige Plättchen ausgeführt und in Taschen 14 eingesetzt, die an der Querachse 12 des Wärmeleitkörpers 1 angeordnet sind. Die PTC-Elemente 2 erstrecken sich mit einer Hauptfläche entlang der Querachse 12. Da die PTC-Elemente 2 einerseits an die Stromschiene 3 und den Wärmeleitkörper 1 kontaktiert werden und andererseits möglichst vollflächig an dem Wärmeleitkörper 1 und der Stromschiene 3 anliegen sollen, werden sie vor der Umspritzung verpresst.
Alternativ können diese auch mit einer Feder vorgespannt werden oder anders montiert sein.

Die Stromschiene 3 verläuft von einem Anschlussbereich 10 zu den PTC-Elementen 2 zum Teil entlang der Hauptachse 12 des Wärmeleitkörpers 1. In dem Anschlussbereich 10 sind die elektrischen Anschlüsse der Heizung vorgesehen.

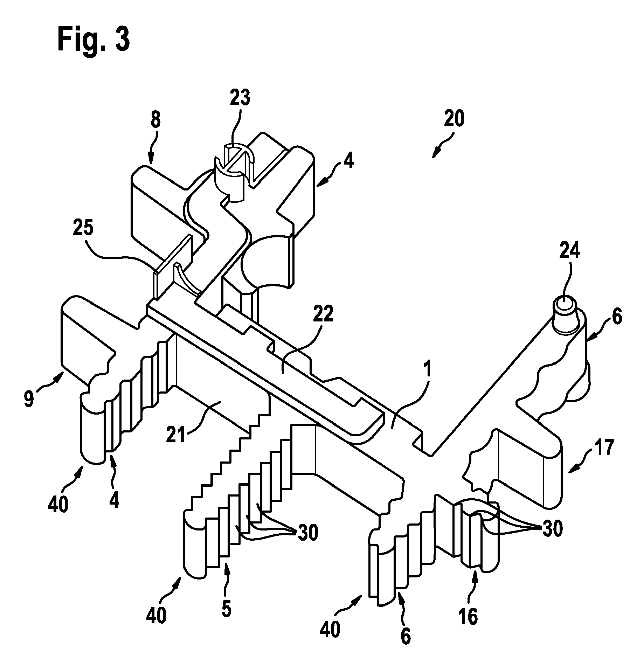

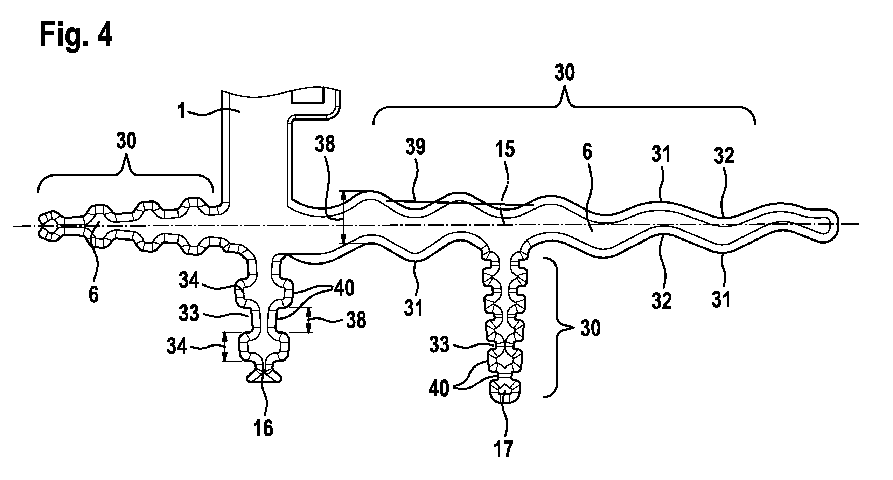

Der Wärmeleitkörper 1 umfasst hier beispielhaft drei Äste 4, 5, 6. Die Äste 4, 5, 6 weisen verschiedene Ausführungsformen von spannungs- und/oder dehnungsvermindernden Elementen 30 auf, welche mit Bezug auf die Figuren 4 bis 7 und 9 bis 12 beschrieben werden, wobei die Figuren 4 bis 7 vergrößerte Ansichten von Teilbereichen der in Figur 2 und 3 dargestellten Wärmeleitkörper 1 und Wärmeverteilelemente 20 zeigen. Der erste Ast 4 weist eine erste Hauptachse 11 auf, welche im Wesentlichen senkrecht zur Querachse 12 des Wärmeleitkörpers 1 verläuft, und umfasst hier beispielhaft drei Zweige 7, 8, 9, die in Richtung der Querachse 12 des Wärmeleitkörpers 1 verlaufen. Auf der den Taschen 14 gegenüberliegenden Seite des Wärmeleitkörpers 1 ist wegen der Verpressung der PTC-Elemente in dem entsprechenden Bereich kein Ast vorgesehen. Zwischen den Taschen 14 ist auf der diesen gegenüberliegenden Seite ein zweiter Ast 5 des Wärmeleitkörpers 1 angeordnet. Der dritte Ast 6 erstreckt sich im dargestellten Ausführungsbeispiel im Wesentlichen in Bezug zu einer zweiten Hauptachse 13 des zweiten Astes 5 spiegelverkehrt zum ersten Ast 4 und weist eine dritte Hauptachse 15 auf, welche im Wesentlichen senkrecht zu der Querachse 12 des Wärmeleitkörpers 1 verläuft. Von dem dritten Ast 6 ausgehend erstrecken sich senkrecht zu dessen dritter Hauptachse 15 zwei Zweige 16, 17. Alternativ kann bei Bedarf der Wärmeleitkörper 1 mit weiteren Ästen, beziehungsweise spannungs- und/oder dehnungsvermindernden Elementen 30 ausgestattet werden.

Der dargestellte Wärmeleitkörper 1 mit den eingesetzten PTC-Elementen 2 und der eingesetzten Stromschiene 3 ist ein Montagezwischenprodukt, welches einer Umspritzmaschine zugeführt wird. Zusätzlich kann die Stromschiene 3 vorumspritzt werden, um die Montage der PTC-Elemente 2 sowie die Montage von Isolationsblättchen zu erleichtern und um bei der Endumspritzung für genügend Abstand zwischen der Stromschiene 3 und dem Wärmeleitkörper 1 zu sorgen. Der Abstand zwischen der Stromschiene 3 und dem Wärmeleitkörper 1 ist für die Trennung der Potentiale unbedingt notwendig. Insbesondere bei einem im Druckgussverfahren hergestellten Wärmeleitkörper 1 können eine oder mehrere Vertiefungen und/oder Erhöhungen vorgesehen werden, so dass die Stromschiene 3 teilweise oder vollständig in dem Wärmeleitkörper 1 versenkt ist oder durch weitere Führungselemente in Position gehalten wird, was insbesondere für den Umspritzungsvorgang von Bedeutung ist. Ansonsten kann die Querschnittfläche des Wärmeleitkörpers 1 über dessen Höhe im Wesentlichen gleichbleibend ausgebildet sein. Natürlich können auch an der oberen und der unteren Seite des Wärmeleitkörpers 1 spannungs- und/oder dehnungsvermindernde Elemente 30 angebracht werden.

Figur 3 zeigt einen Wärmeverteilkörper 20 für eine Heizung eines SCR-Systems nach der Umspritzung. Von der Umspritzung 21 umschlossen, d. h. vollständig von dieser umgeben sind der Wärmeleitkörper 1, die Stromschiene 3 und die PTC-Elemente 2, welche in Figur 1 dargestellt sind. Der Wärmeverteilkörper 20 weist eine Erhöhung 22 dort auf, wo die Stromschiene 3 verläuft. Der umspritzte Wärmeverteilkörper 20 weist in der Umspritzung Aufnahmepunkte 23 und 24 auf, welche so verteilt sind, dass für den Fall, dass die Heizung zur Montage auf den Aufnahmepunkten 23 und 24 ruht, diese sicher ausgerichtet ist und in dieser Position montiert und verschweißt werden kann. Auf der nicht sichtbaren Unterseite der Heizung sind in der Umspritzung 21 drei Schnittstellen zum Befestigen des Heizelementes integriert. Ein von unten bis nach oben verlaufender Schild 25 dient zur Vermeidung des Eintrittes von reflektierten bzw. unerwünschten und störenden Ultraschallwellen zu einem Empfänger bzw. Sensor. Auch wird durch den Schild 25 die Wärme von der Heizung in Richtung des Sensorultraschallrohrs besser transportiert, wodurch dieser schneller auftauen kann.

Figur 4 zeigt den dritten Ast 6 aus Figur 2 in Draufsicht. Figur 4 zeigt mehrere Ausführungsformen von spannungs- und/oder dehnungsverringernden Elementen 30, die hier beispielhaft dem dritten Ast 6 zugeordnet sind. Entlang eines Abschnittes der dritten Hauptachse 15 sind die spannungs- und/oder dehnungsreduzierenden Elemente 30 mit Wellenprofil ausgebildet, hier beispielsweise mit fünf Wellenbergen 31 und fünf Wellentälern 32. Die Anzahl der Wellenberge 31 und Wellentäler 32 kann je nach Ausführungsform der Erfindung variieren; so können Ausführungsformen vorgesehen sein, die lediglich ein oder zwei Wellenberge 31 und/oder Wellentäler 32 in einem Ast 6 oder in einem Zweig umfassen und es können Ausführungsformen vorgesehen sein, die eine Vielzahl, insbesondere drei bis zehn Wellenberge 31 und/oder Wellentäler 32 in einem Ast 6 oder in einem Zweig 7, 8, 9 vorsehen. Es hat sich herausgestellt, dass die Anzahl der Wellenberge 31 und Wellentäler 32 bevorzugt anwendungsspezifisch im Wege der FEM-Simulation festgelegt werden sollte, um optimale Ergebnisse bezüglich der Minimierung der Spannungen und Dehnungen und der Heizleistung zu erzielen. Das Wellenprofil kann vollständig ober- bzw. unterhalb der dritten Hauptachse 15 angeordnet sein oder, wie dargestellt, können die Wellentäler 32 bis zur dritten Hauptachse 15 reichen. Im dargestellten Fall entspricht die Amplitude des Wellenprofils in etwa 50 % einer Breite 38 des dritten Astes 6, wobei die Amplitude sich als eine Höhe eines Wellenbergs 31 oder eines Wellentals 32 in Bezug auf einen fiktiven Nulldurchgang 39 des Wellenprofils definiert sein kann. Die Amplitude kann insbesondere zwischen 10 % und 50 % der Breite der Äste oder Zweige liegen und kann anwendungsspezifisch durch FEM-Simulation festgelegt werden. Die Wellenlänge des Wellenprofils, d. h. die Anzahl der Wellenberge 31 und Wellentäler 32 entlang der räumlichen Ausdehnung des Abschnittes der dritten Hauptachse 15, an welcher das Wellenprofil ausgebildet ist, kann konstant sein oder variieren.

Entlang der Zweige 16, 17 sind die spannungs- und/oder dehnungsvermindernden Elemente 30 als Nuten 33 ausgebildet. Die Nuten 33 sind hier beispielhaft flach bauchig ausgeführt. Die Tiefe der Nuten kann insbesondere zwischen 10 % und 50 % der Breite der Äste oder Zweige liegen und kann anwendungsspezifisch durch FEM-Simulation festgelegt werden. Die Anzahl der Nuten 33 kann über einen Ast 4, 5 oder 6 bzw. über einen Zweig 16, 17 variieren, so kann beispielsweise lediglich eine oder zwei Nuten 33 oder auch eine Vielzahl, etwa drei bis zehn Nuten über einen Zweig 16, 17 oder einen Ast 6 verteilt sein. Je nach Ausführungsform kann dabei eine Breite 38 der Nuten 33 variiert werden oder ein lichter Abstand 34 zwischen den Nuten 33. Am ersten Zweig 16 sind beispielhaft drei Nuten 33 ausgebildet und am zweiten Zweig 17 sind beispielhaft fünf Nuten 33 vorgesehen.

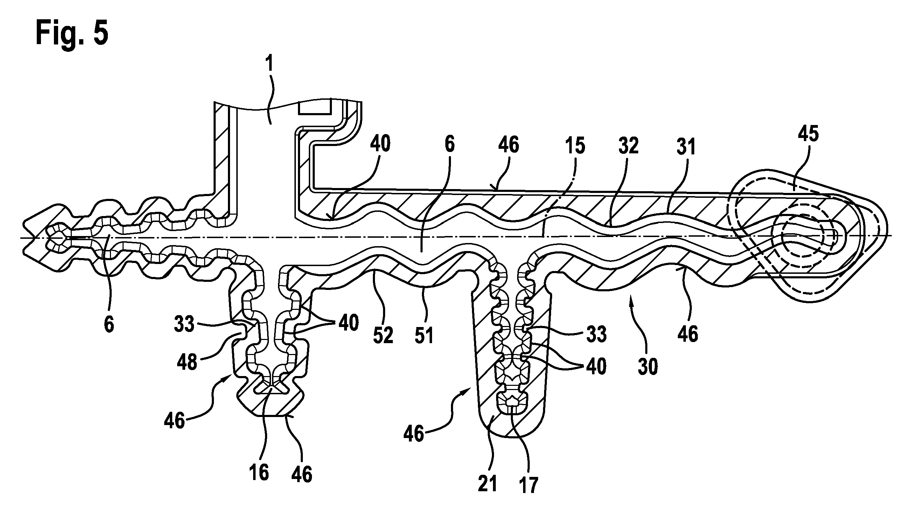

Figur 5 zeigt den dritten Ast 6 gemäß Figur 4 mit einer Umspritzung, wie sie in Figur 3 dargestellt ist. Die Darstellung ist in Schnittansicht bezüglich der Umspritzung 21 gewählt, die hier schraffiert dargestellt ist, und zur Erleichterung des Verständnisses bezüglich des Wärmeleitkörpers 1 in Draufsicht.

Am äußeren Ende der dritten Hauptachse 15 ist außerdem ein Schweißpunkt 45 dargestellt. Bezüglich der Umspritzung 21 sind verschiedene Varianten einer Außenkontur 46 dargestellt. Im Bereich des Zweiges 16 sind in der Umspritzung 21 bzw. in der Kontur 46 des Zweiges 16 Nuten 48 eingebracht, welche zu den Nuten 33 im Wärmeleitkörper 1 korrespondieren, so dass die spannungs- und dehnungsvermindernden Elemente 30 von außen auch nach dem Umspritzen sichtbar sind. Im Bereich des Zweiges 17 ist die Außenkontur 46 der Umspritzung 21 glatt ausgeführt und folgt nicht den fünf Nuten 33, welche in die Außenkontur 40 des Wärmeleitkörpers 1 eingebracht sind. Auch bezüglich des Wellenprofils mit Wellenbergen 51 und Wellentälern 52, welche der Wärmeleitkörper 1 entlang der dritten Hauptachse 15 des dritten Astes 6 aufweist, sind zwei verschiedene Ausführungsformen dargestellt. Auf einer ersten Seite ist die Außenkontur 46 der Umspritzung 21 wellenfrei, nutenfrei und vertiefungsfrei, d.h. im Wesentlichen eben ausgebildet und auf einer zweiten Seite der dritten Hauptachse 15 folgt die Außenkontur 46 der Umspritzung 21 mit beispielsweise fünf Wellenbergen 51 und fünf Wellentälern 52 der Außenkontur 40 des Wärmeleitkörpers 1, d.h. dessen Wellenprofil.

Weitere Ausführungsformen sind durch entsprechende Gestaltung der Spritzformen für den Fachmann offensichtlich, insbesondere kann eine Außenkontur 46 mit einer Anzahl von Wellenbergen 51 und Wellentälern 52, Vertiefungen oder Erhöhungen vorgesehen sein, die verschieden von der Anzahl der Wellenberge 31, Wellentäler 32, Vertiefungen oder Erhöhungen des Wärmeleitkörpers 1 ist.

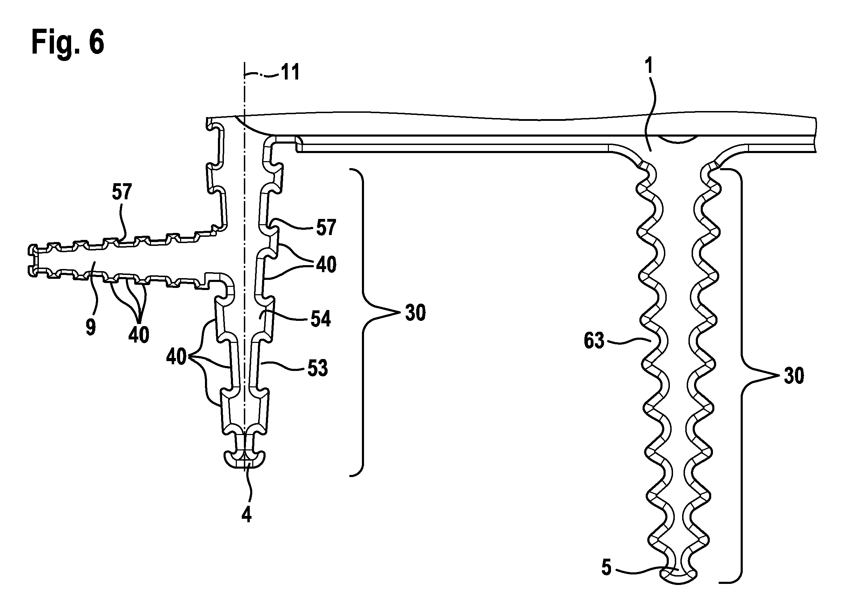

Figur 6 zeigt einen Teil des in Figur 2 dargestellten ersten Astes 4 mit einem Zweig 9 und den zweiten Ast 5 des Wärmeleitkörpers 1 in Draufsicht, wobei weitere Ausführungsformen der spannungs- und/oder dehnungsvermindernden Elemente 30 dargestellt sind. An dem Zweig 9 des zweiten Astes 4 und entlang eines Teils seiner Hauptachse 11 sind die spannungs- und/oder dehnungsverringernden Elemente 30 als Formschlusselemente ausgebildet. Die Formschlusselemente umfassen eine Struktur mit hier beispielsweise sechs Zapfen 54 und beispielsweise sechs Aussparungen 53, wobei deren Anzahl je nach Ausführungsform in den Bereichen variieren kann, wie sie in Bezug auf die Nuten 33 in Figur 4 angegeben wurden. Die Zapfen 54 weisen Hinterschnitte 57 auf. Durch die Hinterschnitte 57 wird gegenüber den Ausführungsformen mit bauchigen Nuten 33 gemäß Figur 4 eine weitere Oberflächenvergrößerung des Zweiges 9 erreicht.

Entlang des zweiten Astes 5 sind nach einer weiteren Ausführungsform als spannungs- und/oder dehnungsverringernde Elemente 30 spitz zulaufende Nuten 63 vorgesehen, wobei deren Anzahl je nach Ausführungsform ebenfalls in den angegebenen Bereichen festgelegt sein kann.

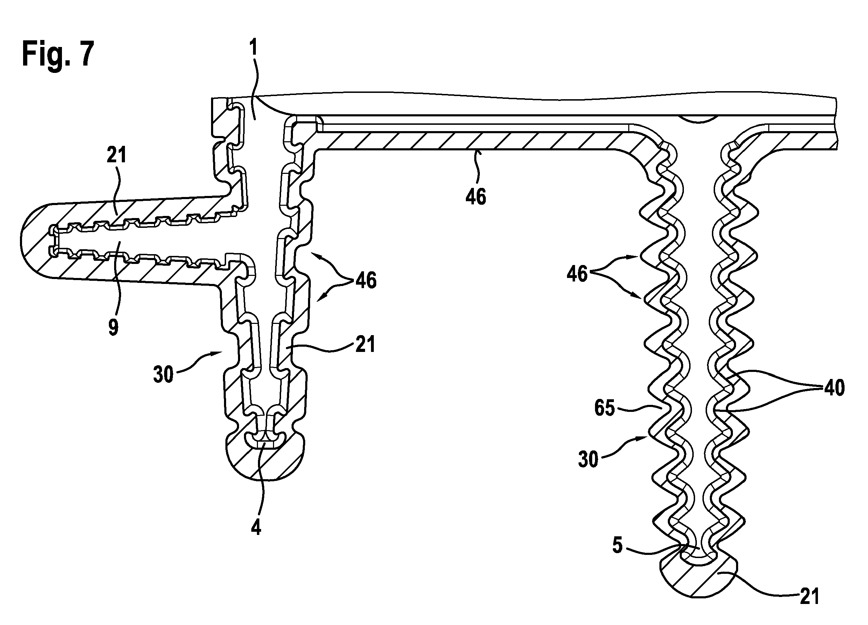

Figur 7 zeigt einen dem in Figur 6 dargestellten Ausschnitt entsprechenden Ausschnitt aus dem Wärmeverteilkörper gemäß Figur 3 in Schnittansicht. Die Darstellung ist in Schnittansicht bezüglich der Umspritzung 21 gewählt, die hier wiederum schraffiert dargestellt ist, und zur Erleichterung des Verständnisses bezüglich des Wärmeleitkörpers 1 in Draufsicht.

Wiederum ist gezeigt, dass die Umspritzung 21 eine Außenkontur 46 aufweisen kann, welche der Außenkontur 40 des Wärmeleitkörpers 1 folgen kann oder von dieser abweichen kann. Entlang des Zweiges 9 ist vorgesehen, dass die Umspritzung 21 außenwandig eben ausgeführt wird, d.h. wellen, vertiefungs- und erhebungsfrei. Entlang des zweiten Astes 5 folgt die Außenkontur 46 im Wesentlichen der Außenkontur 40 des Wärmeleitkörpers 1 und umfasst spitz zulaufende Nuten 65.

Figur 8 zeigt eine perspektivische Ansicht von einer Tankbaueinheit 66 mit einer Heizung 68, wobei die Heizung 68 mit einem Träger 69 verschweißt ist.

Die Tankbaueinheit 66 wird mit einem Reduktionsmittelbehälter zum Beispiel durch Anschweißen verbunden, wodurch eine Tankeinheit entsteht, welche ein Teil eines SCR-Systems bildet. Der Wärmeverteilkörper 20 wurde mit Bezug auf die Figuren 2 bis 7 beschrieben. Zwischen einem Ausläufer des ersten Astes 4 und einem Ausläufer des dritten Astes 6 ist Platz für ein Gehäuse 71 eines Förderaggregats vorgesehen, welches das Reduktionsmittel aus dem Tank einem Dosiermodul zufördert. Das Gehäuse 71 kann als ein Teil des Trägers 69 ausgebildet sein. Der Wärmeverteilkörper 20 wird von der Flüssigkeit, insbesondere AdBlue^{®} bei vollem Tankinhalt umgeben und bei niedrigem Tankfüllstand kann die Heizung 68 auch vollständig oder teilweise nicht von Reduktionsmittel bedeckt sein. Im dargestellten Ausführungsbeispiel sind Wellenprofile in den Ästen 4, 5, 6 des Wärmeverteilkörpers 20 vorgesehen, wobei die Wellenprofile in den Zweigen 16, 17 lediglich einen Wellenberg 31, 51 und ein Wellental 32, 52 umfassen und weitere Zweige 16, 17 mehrere Wellenberge 31, 51 und mehrere Wellentäler 32, 52 umfassen, was sich durch Simulation als optimal herausgestellt hat. Die Wellenprofilierung der Umspritzung 21 kann der nicht sichtbaren Außenkontur des Wärmeleitkörpers 1 folgen. Unter der Heizung 68 befindet sich ein Filter, welcher Partikel zurückhält, um eine Funktionsbeeinträchtigung des Dosiermoduls zu verhindern. Am ersten Ast 4 anliegend sind ein Ultraschallrohr 70 sowie der Hitzeschild 25 angeordnet, deren Hauptfunktion darin liegt, reflektierte unerwünschte Schallwellen vom Sensor zurückzuhalten und erwünschte Schallwellen zu bündeln. Der Hitzeschild 25, welcher der Heizung 68 zugeordnet ist, kann, wie dargestellt, einen Teil des Ultraschallrohres 70 bilden. Ferner gewährleistet der Hitzeschild 25 auch ein schnelles Auftauen des Reduktionsmittels innerhalb des Ultraschallrohres 70. Im oberen Bereich der Tankbaueinheit 66 sind zwei elektrische 72, 74 Schnittstellen angeordnet. Zwischen ihnen ist eine hydraulische Schnittstelle 73 nach SAE-Norm angeordnet, welche mit einer Schutzkappe 75 versehen ist. Die elektrischen und hydraulischen Schnittstellen sind derart ausgestaltet, dass sie die gleiche Streckrichtung haben und dadurch die Tankeinheit auch bei beengten Platzverhältnissen im Fahrzeug montiert werden kann.

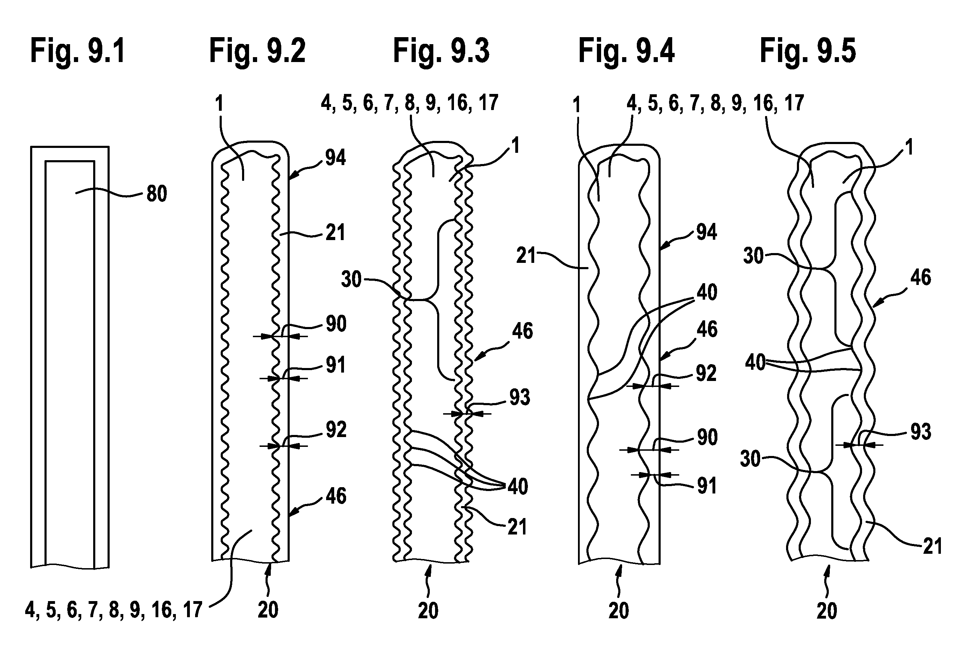

In den Figuren 9.1 - 12.3 sind beispielhaft weitere mögliche Ausführungsformen von Ästen 4, 5, 6 oder Zweigen 7, 8, 9 ; 16, 17 des Wärmeverteilkörpers 20 dargestellt, wobei der Wärmeverteilkörper 20 jeweils rechts, links und an der Oberseite umspritzt, beziehungsweise beschichtet ist.

Eine erste Darstellung, vgl. Bezugszeichen 80 in Figur 9.1 zeigt eine aus dem Stand der Technik bekannte Variante.

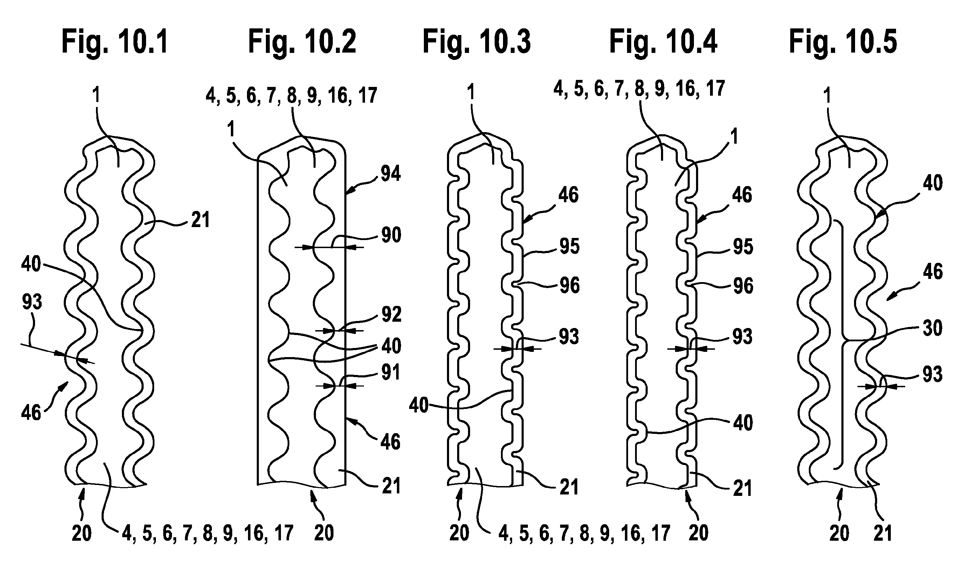

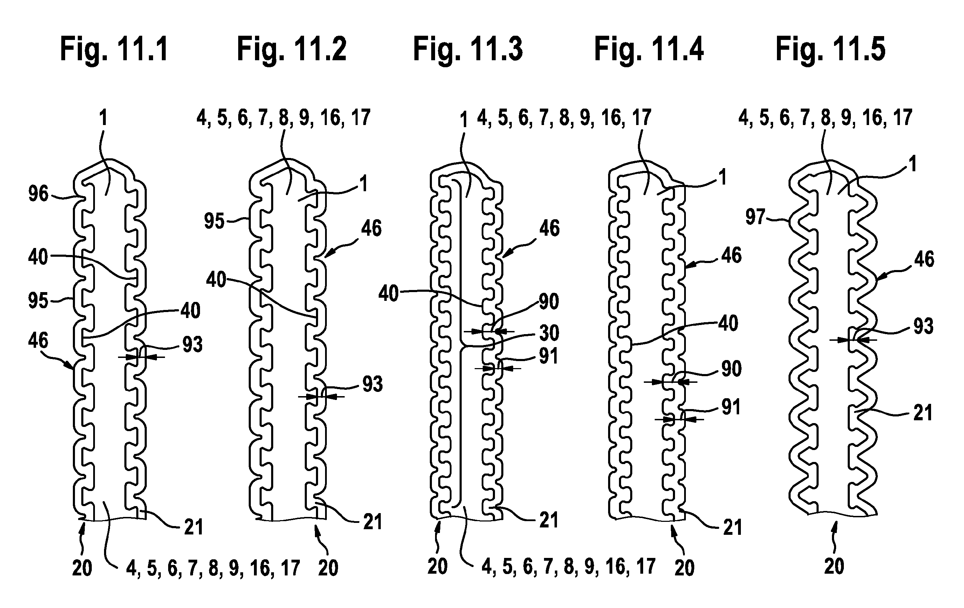

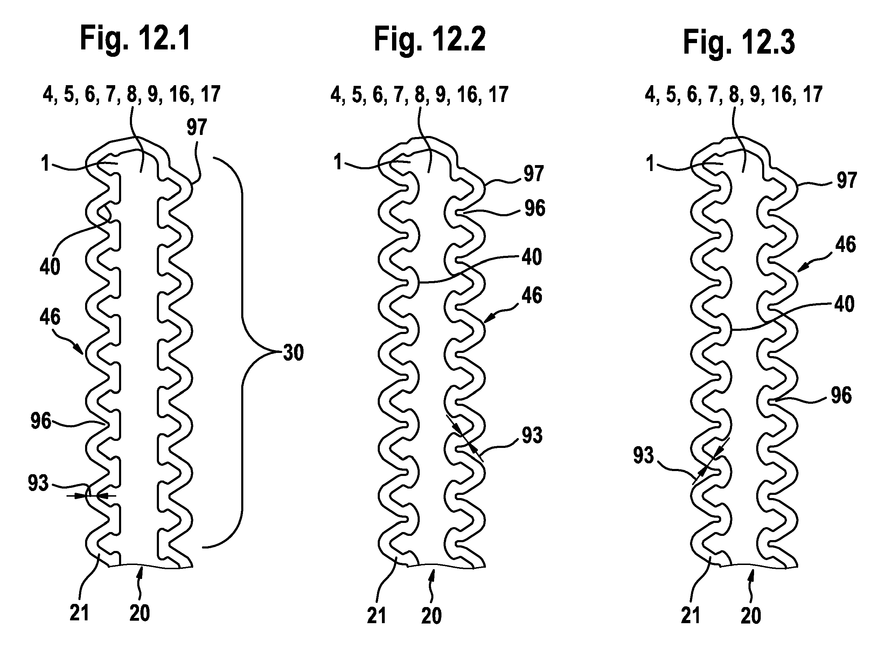

In den weiteren Darstellungen gemäß der Figuren 9.2 - 12.3 variieren Anzahl, Größe und Form der spannungs- und/oder dehnungsverringernden Elemente 30 sowie die Außenkontur 46 der Umspritzung 21 und die Außenkontur 40 des Wärmeleitkörpers 1. Anhand der Figuren 9.2 - 12.3 werden verschiedene Ausführungsmöglichkeiten der Gestaltung von Außenkonturen 40 des Wärmeleitkörpers 1 dargestellt, die die Außenkontur 46 der Umspritzung 21 ausbilden können. Die Außenkontur 40 des Wärmeleitkörpers 1 wird im Wesentlichen durch die Geometrie der spannungs- und dehnungsvermindernden Elemente 30 bestimmt. Je nach Ausführung der Umspritzung 21 aus einem Kunststoffmaterial, kann die Außenkontur 40 des Wärmeleitkörpers 1 in Gestalt der spannungs- und dehnungsvermindernden Elemente 30 auf die Außenkontur 46 der Umspritzung 21 durchschlagen oder es besteht die Möglichkeit, vergleiche Figuren 9.2, 9.4, 10.2, die Außenkontur 46 der Umspritzung 21 als eine ebene Außenseite 94 zu gestalten. In unmittelbarem Gegensatz dazu, ergibt sich die Außenkontur 46 der Umspritzung 21 gemäß der Ausführungsbeispiele in den Figuren 11.1 bis 11.5 bzw. 12.1 bis 12.3, in denen die Außenkontur 46 der Umspritzung 21 unmittelbar durch die Außenkontur 40 des Wärmeleitkörpers 1 bzw. von dessen Ästen 4, 5, 6 und Zweigen 7, 8, 9, 16 und 17 vorgegeben wird.

Figur 9.2 zeigt einen Wärmeverteilkörper 20, bei dem eine Umspritzung 21 an der Außenseite eines der Äste 4, 5 oder 6 beziehungsweise einem der Zweige 7, 8, 9, 16, 17 aufgenommen ist. Wie aus der Darstellung gemäß Figur 9.2 hervorgeht, weist die Umspritzung 21 eine ebene Außenseite 94 auf. Die Umspritzung 21 als solche ist eine Umspritzung mit einer variierenden Wandstärke 92, in der eine erste größere Wandstärke 90 und eine zweite, geringer ausfallende Wandstärke 91 in alternierender Reihenfolge ausgebildet sind, sodass sich die in Figur 9.2 dargestellte wellenförmige Profilierung der Umspritzung 21 einstellt.

Figur 9.3 zeigt eine Ausführungsvariante, bei welcher die Umspritzung 21, die die Äste 4, 5, 6 oder die Zweige 7, 8, 9, 16, 17 umgibt, in einer einheitlichen Wandstärke 93 ausgebildet ist. Dem Wellenprofil gemäß Figur 3 folgend, stellt sich die Außenkontur 46 des Wärmeverteilkörpers 20 gemäß der Ausführungsvariante in Figur 9.3 als eine nicht eben beschaffene Außenseite dar, im Gegensatz zur ebenen Außenseite 94 der in Figur 9.2 dargestellten Ausführungsvariante.

Figur 9.4 zeigt die Ausführungsform eines Wärmeverteilkörpers 20, bei dem die Umspritzung 21 in variierender Wandstärke 92 ausgelegt ist. In einer größeren Teilung, d.h. in größerem räumlichen Versatz zueinander sind Wellenberge und Wellentäler ausgeführt, vgl. die erste Wandstärke 90 sowie die zweite Wandstärke 91. Die Umspritzung 21 gemäß der Ausführungsform in Figur 9.4 umgibt die Äste 4, 5, 6 bzw. Zweige 7, 8, 9, 16, 17 unter Ausbildung einer Außenkontur 46, die eine ebene Außenseite 94 umfasst.

Figur 9.5 zeigt eine Ausführungsvariante eines Wärmeverteilkörpers 20, bei dem die Umspritzung 21 ebenfalls in einer einheitlichen Wandstärke 93 ausgebildet ist, die Außenkontur 46 jedoch uneben bleibt. Die Umspritzung 21 umschließt gemäß Figur 9.5 Äste 4, 5, 6 bzw. Zweige 7, 8, 9 und 16, 17 des Wärmeverteilkörpers 20.

In den Figuren 10.1 bis 10.5 sind Ausführungsvarianten zu entnehmen, bei denen vgl. Figur 10.1 der Wärmeverteilkörper 20 durch die Umspritzung 21 sowie die von der Umspritzung 21 umschlossenen Äste 4, 5, 6 bzw. Zweige 7, 8, 9, 16, 17 gebildet wird. Gemäß der Variante in Figur 10.1 ist die Umspritzung 21 in einer einheitlichen Wandstärke 93 ausgebildet und im Wesentlichen mäanderförmig ausgeführt, sodass sich die Außenkontur 46 ergibt.

In der Darstellung gemäß Figur 10.2 ist eine Ausführungsvariante eines Wärmeverteilkörpers 20 gezeigt, bei welchem die Umspritzung 21 eine ebene Außenseite 94 bildet und die Äste 4, 5, 6 bzw. Zweige 7, 8, 9, 16, 17 umschließt, wobei sich Bereiche der Umspritzung 21, die in einer ersten Wandstärke 90 ausgebildet sind mit solchen Bereichen abwechseln, in denen die Umspritzung 21 eine zweite, verringerte Wandstärke 91 aufweist.

Figur 10.3 zeigt eine Ausführungsvariante eines Wärmeverteilkörpers 20, bei dem die Umspritzung 21, die die Äste 4, 5, 6 bzw. Zweige 7, 8, 9, 16, 17 umschließt, im Wesentlichen wellenförmig profiliert ist. Die Umspritzung 21 weist eine einheitliche Wandstärke 93 auf, es stellt sich eine Außenkontur 46 ein, die ebene Plateaus 95 und dazwischen verlaufende Einschnitte 96 umfasst.

Figur 10.4 zeigt eine weitere Ausführungsvariante des Wärmeverteilkörpers 20, welche der Ausführungsform gemäß Figur 10.3 ähnelt. Hier ist die Umspritzung 21 in einer einheitlichen Wandstärke 93 ausgebildet, sodass sich ebenfalls eine Außenkontur 46 der Umspritzung 21 darstellt, die durch einzelne Plateaus 95 gekennzeichnet ist, die von Einschnitten 96 voneinander getrennt sind. Die Umspritzung 21 ist auf die Außenseite der Äste 4, 5, 6 bzw. der Zweige 7, 8, 9, 16, 17 aufgebracht.

Figur 10.5 ähnelt der Ausführungsvariante gemäß Figur 10.1, bei der die Umspritzung 21 in einheitlicher Wandstärke 93 um die Äste 4, 5, 6 bzw. Zweige 7, 8, 9, 16, 17 angebracht ist, sodass sich die mäanderförmig konturierte Außenkontur 46 einstellt.

Den Figuren 11.1 bis 11.5 sind weitere Ausführungsformen von Wärmeverteilkörpern 20 zu entnehmen.

Gemäß der in den Figuren 11.1 bis 11.5 dargestellten Ausführungsvarianten sind die Wärmeverteilkörper 20 jeweils durch die Äste 4, 5, 6 bzw. Zweige 7, 8, 9, 16, 17 und die diese umgebende Umspritzung 21 gebildet. An einer jeden der Ausführungsvarianten gemäß der Figuren 11.1 bis 11.5 stellt sich eine Außenkontur 46 ein, die nicht eben ausgebildet ist, sondern einzelne Plateaus 95 bzw. Spitzen 97 umfasst, die durch Einschnitte 96 in der Umspritzung 21 voneinander getrennt sind. Während bei den Ausführungsformen gemäß der Figuren 11.1 und 11.2 die Umspritzung 21 in einer einheitlichen Wandstärke 93 ausgebildet ist, sind die Wandstärken bei den Ausführungsvarianten der Figuren 11.3 und 11.4, was die Umspritzung 21 anbetrifft, unterschiedlich. Dort wechseln Bereiche der Umspritzung 21, die in einer ersten Wandstärke 90 ausgebildet sind mit solchen Bereichen der Umspritzung 21, die in einer zweiten verringerten Wandstärke 91 ausgeführt sind.

Bei der in Figur 11.5 dargestellten Ausführungsvariante ist die Umspritzung 21 der Äste 4, 5, 6 bzw. Zweige 7, 8, 9, 16, 17 in einer im Wesentlichen einheitlichen Wandstärke 93 ausgeführt.

Wie der Darstellung gemäß Figur 11.5 zu entnehmen ist, entsteht ein Wärmeleitkörper 20, dessen Außenkontur 46 zackenförmig ausgebildet ist.

Den Figuren 12.1 bis 12.3 sind weitere Ausführungsformen für einen Wärmeverteilkörper 20 zu entnehmen. Der Wärmeverteilkörper 20 gemäß der Ausführungsvarianten in den Figuren 12.1, 12.2 und 12.3 umfasst analog zu den vorstehend beschriebenen Ausführungsvarianten einen der Äste 4, 5, 6 bzw. Zweige 7, 8, 9, 16, 17, der mit einer Umspritzung 21 versehen ist. Wie aus den Figuren 12.1, 12.2, 12.3 hervorgeht, ist in dieser Ausführungsvariante die Umspritzung 21 in einer einheitlichen Wandstärke 93 ausgeführt. Es entstehen wie in Figur 11.5 bereits erwähnt Außenkonturen 46, Spitzen 97, d.h. die nasenförmige Vorsprünge aufweisen und neben der in Figur 11.5 dargestellten Ausführungsmöglichkeit auch so ausgebildet werden können, wie in den Figuren 12.1, 12.2 und 12.3 abgebildet.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Wärmeverteilkörper (20) für eine Heizung (68) eines Systems zur Nachbehandlung von Abgasen, wobei der Wärmeverteilkörper (20) einen Wärmeleitkörper (1) mit mehreren Armen und eine Umspritzung (21) aufweist, wobei am Wärmeleitkörper (1) spannungs- und/oder dehnungsvermindernde Elemente (30, 31, 32, 33, 34, 53, 54, 63) zur relativbewegungsarmen Aufnahme der Umspritzung (21) am Wärmeleitkörper (1) ausgebildet sind, wobei die spannungs- und/oder dehnungsvermindernden Elemente (30, 31, 32, 33, 34, 53, 54, 63) in der Außenkontur (40) des Wärmeleitkörpers (1) ausgebildet sind, **dadurch gekennzeichnet, daß** entlang einiger Arme des Wärmeleitkörpers die Außenkontur (40) des Wärmeleitkörpers (1) Wellenberge (31) und Wellentäler (32) und/oder Vertiefungen (33, 53, 63) und/oder Nuten umfasst, welche die spannungs- und/oder dehnungsvermindernden Elemente bilden, so daß beim Aufheizen und Abkühlen in der Umspritzung entstehende Dehnungen und Spannungen gleichmäßig über den mindestens einen Arm verteilt werden, so dass die Umspritzung nicht beschädigt wird und die Gefahr eines Abhebens der Umspritzung vom Wärmeleitkörper reduziert wird.

2. Wärmeverteilkörper nach einem der vorhergehenden Ansprüche, **dadurch gekennzeichnet, dass** zumindest eines der spannungs- und/oder dehnungsvermindernden Elemente (30) als Formschlusselement (53, 54) ausgebildet ist.

3. Wärmeverteilkörper nach einem der vorhergehenden Ansprüche, **dadurch gekennzeichnet, dass** zumindest ein Teil einer Außenkontur (46) der Umspritzung (21) der Außenkontur (40) des Wärmeleitkörpers (1) folgt.

4. Wärmeverteilkörper nach einem der vorhergehenden Ansprüche, **dadurch gekennzeichnet, dass** die Außenkontur (46) der Umspritzung (21) eine ebene Außenseite (94) aufweist.

5. Wärmeverteilkörper nach einem der vorhergehenden Ansprüche **dadurch gekennzeichnet, dass** die Außenkontur (40) des Wärmeleitkörpers (1) spitzenfrei und kantenfrei ausgebildet ist.

6. Wärmeverteilkörper nach einem der vorhergehenden Ansprüche, **dadurch gekennzeichnet, dass** der Wärmeleitkörper (1) im Druckgussverfahren oder im Stranggussverfahren hergestellt ist.

7. Wärmeverteilkörper nach einem der vorhergehenden Ansprüche, **dadurch gekennzeichnet, dass** die Umspritzung (21) einen flüssigkeitsbeständigen, isolierenden, wärmeleitenden Kunststoff umfasst.

8. Heizung (68) mit einem Wärmeverteilkörper (20) nach einem der Ansprüche 1 bis 7, die mindestens ein PTC-Element (2) und mindestens eine Stromschiene (3) aufweist.

9. System zur Nachbehandlung von Abgasen mit einem Behälter für ein Reduktionsmittel und mit einer Heizung (68) gemäß der Merkmale des Anspruchs 8.

## Claims

1. Heat-distributing body (20) for a heater (68) of a system for the aftertreatment of exhaust gases, wherein the heat-distributing body (20) has a heat-conducting body (21) with multiple arms and has an injection-moulded encapsulation (21), wherein stress-reducing and/or strain-reducing elements (30, 31, 32, 33, 34, 53, 54, 63) for the retention of the injection-moulded encapsulation (21) on the heat-conducting body (1) with little relative movement are formed on the heat-conducting body (1), wherein the stress-reducing and/or strain-reducing elements (30, 31, 32, 33, 34, 53, 54, 63) are formed in the outer contour (40) of the heat-conducting body (1), **characterized in that**, along some arms of the heat-conducting body, the outer contour (40) of the heat-conducting body (1) comprises undulation peaks (31) and undulation troughs (32) and/or depressions (33, 53, 63) and/or grooves which form the stress-reducing and/or strain-reducing elements, such that, during the heating and cooling, strains and stresses that are generated in the injection-moulded encapsulation are distributed uniformly over the at least one arm, such that the injection-moulded encapsulation is not damaged and the risk of the injection-moulded encapsulation lifting off from the heat-conducting body is reduced.

2. Heat-distributing body according to one of the preceding claims, **characterized in that** at least one of the stress-reducing and/or strain-reducing elements (30) is in the form of a form-fit element (53, 54).

3. Heat-distributing body according to one of the preceding claims, **characterized in that** at least a part of an outer contour (46) of the injection-moulded encapsulation (21) follows the outer contour (40) of the heat-conducting body (1).

4. Heat-distributing body according to one of the preceding claims, **characterized in that** the outer contour (46) of the injection-moulded encapsulation (21) has a planar outer side (94).

5. Heat-distributing body according to one of the preceding claims, **characterized in that** the outer contour (40) of the heat-conducting body (1) is formed without tips and without edges.

6. Heat-distributing body according to one of the preceding claims, **characterized in that** the heat-conducting body (1) is produced in a die casting process or in a continuous casting process.

7. Heat-distributing body according to one of the preceding claims, **characterized in that** the injection-moulded encapsulation (21) comprises an insulating, heat-conducting plastic which is resistant to liquids.

8. Heater (68) having a heat-distributing body (20) according to one of Claims 1 to 7, which heater has at least one PTC element (2) and at least one power rail (3).

9. System for the aftertreatment of exhaust gases, having a tank for a reducing agent and having a heater (68) according to the features of Claim 8.

## Revendications

1. Corps (20) de répartition de chaleur pour le chauffage (68) d'un système de post-traitement de gaz d'échappement,
le corps (20) de répartition de chaleur présentant un corps (1) conducteur de chaleur présentant plusieurs bras et un enrobage (21),
des éléments (30, 31, 32, 33, 34, 53, 54, 63) de réduction de contrainte et/ou d'allongement étant formés sur le corps (1) conducteur de chaleur en vue de reprendre à faible déplacement relatif l'enrobage (21) formé sur le corps (1) conducteur de chaleur,
les éléments (30, 31, 32, 33, 34, 53, 54, 63) diminuant les contraintes et/ou l'allongement étant formés dans le contour extérieur (40) du corps (1) conducteur de chaleur,
**caractérisé en ce que**
le long de certains bras du corps conducteur de chaleur, le contour extérieur (40) du corps (1) conducteur de chaleur comporte des sommets (31) d'ondulation et des fonds (32) d'ondulation et/ou des creux (33, 53, 63) et/ou des rainures qui forment les éléments diminuant les contraintes et/ou l'allongement de telle sorte que les dilatations et les contraintes qui surviennent dans l'enrobage en cas de chauffage ou de refroidissement soient réparties uniformément sur le ou les bras pour que l'enrobage ne soit pas endommagé et que le risque que l'enrobage se détache du corps conducteur de chaleur soit réduit.

2. Corps de répartition de chaleur selon la revendication précédente, **caractérisé en ce qu'**au moins l'un des éléments (30) diminuant les contraintes et/ou l'allongement est configuré comme élément (53, 54) en correspondance géométrique.

3. Corps de répartition de chaleur selon l'une des revendications précédentes, **caractérisé en ce qu'**au moins une partie du contour extérieur (46) de l'enrobage (21) suit le contour extérieur (40) du corps (1) conducteur de chaleur.

4. Corps de répartition de chaleur selon l'une des revendications précédentes, **caractérisé en ce que** le contour extérieur (46) de l'enrobage (21) présente un côté extérieur plan (94).

5. Corps de répartition de chaleur selon l'une des revendications précédentes, **caractérisé en ce que** le contour extérieur (40) du corps (1) conducteur de chaleur ne présente ni pointes ni arêtes.

6. Corps de répartition de chaleur selon l'une des revendications précédentes, **caractérisé en ce que** le corps (1) conducteur de chaleur est réalisé par une opération de moulage sous pression ou une opération d'extrusion.

7. Corps de répartition de chaleur selon l'une des revendications précédentes, **caractérisé en ce que** l'enrobage (21) comporte une matière synthétique résistant aux liquides, isolante et thermiquement conductrice.

8. Chauffage (68) présentant un corps (20) de répartition de chaleur selon l'une des revendications 1 à 7, qui présente au moins un élément PTC (2) et au moins un rail de courant (3).

9. Système de post-traitement des gaz d'échappement présentant un récipient pour agent réducteur et un chauffage (68) selon les caractéristiques de la revendication 8.
